# EUROPEAN PATENT SPECIFICATION

(11) **EP 1 286 606 B1**
(45) Date of publication and mention of the grant of the patent: **01.06.2005**
(21) Application number: 02726145.2
(22) Date of filing: 06.03.2002
(51) Int. Cl.: A44C 27/00, C22C 14/00

(54) **JEWELRY ARRANGEMENTS**
SCHMUCK VORRICHTUNG
AGENCEMENTS DE BIJOUTERIE

(30) Priority: 08.03.2001 EP 01200868; 25.01.2002 GB 0201720
(43) Date of publication of application: 05.03.2003
(73) Proprietor: Barsamian, Philippe, 1301 Bierges (BE); Holemans, Thierry, 1050 Bruxelles (BE)
(72) Inventor: HOLEMANS, Thierry, B-1050 Bruxelles (BE); STALMANS, Rudy, B-3200 Aarschot (BE)
(74) Representative: Bird, Ariane
(86) International application number: PCT/EP2002/002456
(87) International publication number: WO 2002/069749

(56) References cited:
- WO-A-94/23214
- US-A- 4 531 988
- PATENT ABSTRACTS OF JAPAN vol. 2000, no. 07, 29 September 2000 (2000-09-29) & JP 2000 106923 A (PERURA OTA:KK), 18 April 2000 (2000-04-18)
- PATENT ABSTRACTS OF JAPAN vol. 013, no. 569 (C-666), 15 December 1989 (1989-12-15) & JP 01 236004 A (TOKIN CORP), 20 September 1989 (1989-09-20)
- PATENT ABSTRACTS OF JAPAN vol. 017, no. 664 (M-1523), 8 December 1993 (1993-12-08) & JP 05 220849 A (SEIKO INSTR INC), 31 August 1993 (1993-08-31)

## Description

### FIELD OF THE INVENTION

The present invention relates to jewelry arrangements and in particular to jewelry which incorporates at least a section formed from a shape memory material, such as a shape memory alloy. The present invention also relates to a method of producing such jewelry.

### BACKGROUND TO THE INVENTION

It is known to provide jewelry that is at least one of partially captive on, gripping, passing through or enclosing a body part of a wearer. A non-exhaustive list of such jewelry includes forms of finger ring, bracelet, earring necklace, watch-strap/bracelet and some body piercing ornamentation. Problems can arise in fitting some of these types of jewelry or in retaining it in place.

In the case of jewelry rings, such as finger rings used for example to signify marriage, the ring may be placed by one partner onto the finger of the other partner during a ceremony. This act traditionally carries great significance, although in many cases the ring is a simple band of gold, perhaps inscribed. Simplicity in appearance of the wedding ring is a feature that many couples like to preserve. In the world of jewelry and fashion design it is desirable to seek, but difficult to find, interpretations of long established themes such as the wedding ring whilst maintaining traditional values.

There are other problems relating to rings one of which concerns swelling of the finger, which may be caused by illness or accidents such as crushing, impact or burns. It may then become difficult to remove a ring and possible further injury could occur, e.g. due to reduced blood circulation. Under such circumstances, it is known for a ring to be cut or deformed so as to remove it and it may never regain its original shape or significance after repair or may even become totally unusable. Furthermore, some potential wearers may have deformed or otherwise misshapen ring fingers and may experience difficulties in finding and fitting/removing suitable rings.

Similar problems can be envisaged in relation to some other pieces of jewelry such as ornamental bands, which includes bracelets. For example, the bangle type of bracelet is often of a rigid and substantially circular or elliptical shape, although other shapes such as polygons with various numbers of sides may also be used. In order to be captive on a wrist, the cross-section of the bracelet is often smaller than the open hand of a wearer. If a potential wearer has a large hand but small wrist, putting on a rigid and closed bracelet may prove inconvenient. In addition, some rigid bracelets and earrings are openable and include swinging hinge and latching arrangements adapted for manual operation, which may prove tricky to use and may be easily damaged.

It is clearly desirable to seek arrangements that may help alleviate the practical problems discussed above, any such solution being technically competent and simple to use. In doing so it should be remembered that the market dictates any solution offered should also be stylish, whether that involves new concepts in aesthetics or the maintenance of traditional values.

In EP-031070 helical jewelry bands such as rings or bracelets are formed from overlapping wound sections of shape memory wire. These bands may carry ornamentation and use shape memory material in a super-elastic state so as to retain shape whilst being worn, temperature changes not being necessary for fitting, wearing or removal. Once it has been put on, the jewelry of EP-0313070 acts as a static display. Although it may be temporarily deformed during fitting, this jewelry uses only the super-elastic properties of shape memory material and then only for its configuration into a condition suitable for being worn and for shape retention. It will be noted that the gauge of wire used in this arrangement is quite thin (e.g. 0.7mm diameter) and that the bands can be expanded for fitting using a low force. Removal of this low force allows the bands to return towards their original shape, which in free space they should achieve. Since only a low force is required to open the super elastic element, the jewelry can be worn by people having different sizes or body part, e.g. finger or wrist. In the event that a body part such as a wrist is thicker than the inner diameter of the ring/bracelet, then the super elastic element will only exert a gentle pressure on that body part due to the thin gauge of the constituent shape memory wire. The same principle is used in the jewelry disclosed in JP-A-2 000 106 923.

### SUMMARY OF THE INVENTION

It is an object of the present invention to provide improved jewelry arrangements; in particular to provide improved jewelry arrangements that incorporate at least a portion formed from a shape memory material such as a shape memory alloy to provide improved arrangements for producing and fitting such jewelry.

Accordingly, the present invention provides a piece of jewelry according to claim 1. Preferred embodiments are given in the dependent claims.

Said relative movement may be adapted to result in a change to an externally visible shape or configuration of said piece of jewelry. Said relative movement may be adapted to occur in one plane, such that for example said jewelry is non-helical, i.e. said end portions move in preferably the same plane and preferably do not overlap before, during or after said relative movement has occurred.

A said predetermined temperature for end portion closure may lie in the region of a body temperature of a wearer of said jewelry. Said shape memory material may exhibit thermal hysteresis having upper and lower temperature transformation ranges, said upper temperature transformation comprising a range of 10°C or less, preferably 7°C or less and more preferably 5°C or less. Said shape memory material may have an upper transformation start temperature As in the range 18°C to 23°C. Said shape memory material may have an upper transformation finish temperature A, in the range 23°C to 30°C.

Said shape memory material may comprise a stabilized shape memory material, trained and adapted for repeated movement between said open and closed states.

Removal of said piece of jewelry from a wearer might be restricted once said jewelry has substantially moved into said closed state. Said piece of jewelry may be adapted in said closed state to at least one of partially or fully capture, grip, pass through or enclose a body part of a said wearer.

Said relative movement may be adapted to bring said end portions into engagement, in which state said end portions are in at least partial abutment with a clamping force therebetween. Said end portions may comprise a jaw arrangement, preferably substantially complementary jaws adapted for engagement with each other.

One or both said end portions may comprise a locating arrangement adapted to align said end portions in a substantially predetermined relationship when said end portions are engaged.

Said piece of jewelry may further comprise a latching means adapted to latch said end portions into said closed state at least temporarily and preferably removably.

Said piece of jewelry may further comprise an indicator arrangement adapted to indicate when said end portions are at least one of open or closed. Said indicator arrangement may comprise indicia which is at least one of displayed or hidden when said jewelry is in said closed state.

Said shape memory section may be adapted to move said end portions in a substantially pivotal manner.

Said piece of jewelry may be adapted to be gripped or pulled on at least a predetermined section and in such a manner that a gripping or pulling force above a predetermined level moves said piece of jewelry towards said open state.

Said end portions may be adapted to be opened from a closed state under the influence of a said predetermined level of force applied below a predetermined temperature at which said shape memory material adopts a pseudo-elastic state. Said temperature may comprise for example a finish transformation temperature Af for an austenitic phase of said shape memory material and may be above 0 degrees centigrade, preferably above 10 degrees centigrade and more preferably between 10 and 30 degrees centigrade.

Said piece of jewelry may comprise an inactive section, which may be substantially devoid of shape memory material, such that said piece of jewelry is adapted to be handled by said inactive section substantially without changing shape for at least a predetermined time period, so as for example to enable manual fittment.

Said piece of jewelry may comprise an ornamental band whose said open state comprises a substantially elliptical or enlarged circular open-ended shape and whose closed state comprises a reduced gap open-ended shape or a substantially closed shape.

Said piece of jewelry may comprise a piece of jewelry whose said open state comprises a substantially elliptical or enlarged circular open-ended shape and whose closed state comprises a substantially closed circle. The ring may comprise a ring adapted to be fitted to a finger or through a body part such as for example a nose or ear.

An arrangement for storing and/or fitting a piece of jewelry, said arrangement comprising a temperature varying device may be adapted to bring a said piece of jewelry to or beyond a temperature at which said piece is moveable into said open state.

Said temperature varying device may comprise a cooling chamber adapted to receive a said piece of jewelry and a heat exchange means adapted to reduce the temperature of said piece in said chamber.

Said heat exchange means may comprise an electrically operated heat sink apparatus, preferably portable and adapted for battery operation.

Said heat exchange means may further comprise a biasing means adapted to bias a ring therein towards said open state.

The present invention also provides a method of producing a piece of jewelry, the method being given in claim 24, and a preferred embodiment in claim 25.

The method may include stabilizing said shape memory portion for repeated movement of said end portions between said open and closed states, preferably stabilizing said shape memory material by training.

### BRIEF DESCRIPTION OF THE DRAWINGS

Figure 1 shows a schematic illustration of a property change (such as length) versus temperature for a shape memory element. The hysteresis, the activation temperature T_{A}, the deactivation temperature T_{D} and the transformation temperatures M_{S}, M_{f}, A_{S}, A_{f} are indicated;
Figure 2 shows a piece of jewelry according to an embodiment of the present invention in a first state, shape or configuration;
Figure 3 shows the piece of jewelry of Figure 2 in a second state, shape or configuration;
Figure 4 is a detailed view of an aspect of the jewelry of Figures 2 and 3;
Figure 5 is a side view of a piece of jewelry according to a further embodiment of the invention; and
Figure 6 is a perspective view of a cooling arrangement suitable for use with embodiments of the present invention.

### DETAILED DESCRIPTION OF A PREFERRED EMBODIMENT

The present invention will now be described by way of example only with reference to certain embodiments and with reference to the above mentioned drawings.

Materials, both organic and metallic, capable or possessing shape memory and/or superelasticity are known. An article made of materials showing shape memory can be deformed from an original, heat-stable configuration to a second, heat-unstable configuration. The article is said to have shape memory for the reason that, upon the application of the heat alone, it can be caused to revert or attempt to revert from its heat-unstable configuration to its original heat-stable configuration, i.e. it "remembers" its original shape.

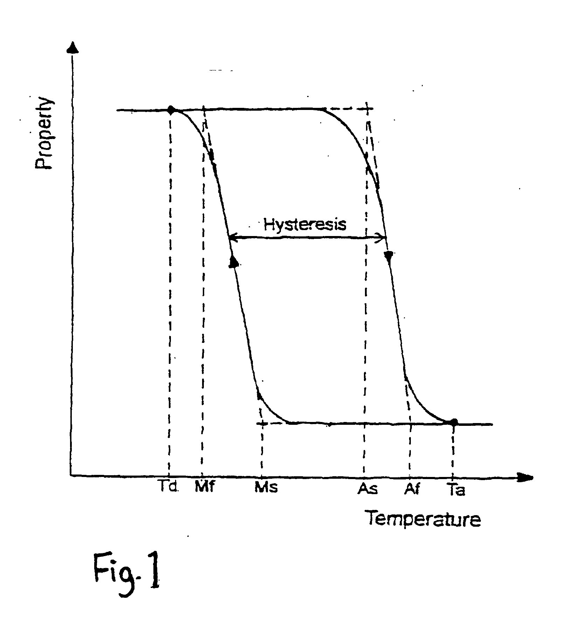

Among metallic alloys, the ability to possess shape memory is a result of the fact that the alloy undergoes a reversible transformation from an austenitic state to a martensitic state with a change of temperature. The transformation from the austenitic phase to the martensitic phase shows a temperature hysterisis, illustrated in Figure 1. It follows that the transformation cannot be characterized by a single value of temperature, but has to be characterized by four temperatures: M_{S} and M_{f} and A_{S} and A_{f} respectively to indicate the temperatures at which the martensitic and the reverse martensitic (austenitic) transformations start and finish. Thus, an article made from such an alloy is easily deformed from its original configuration to a new configuration when cooled to a temperature below M_{f}. When an article thus deformed is warmed, the deformed object will return to its original configuration starting at Aₛ and finishing at A_{f}. A shape memory material can thus be formed into a shape memory element (SME) or article that may be activated and deactivated between states depending upon temperature.

Many shape memory alloys (SMA) are known to show also superelasticity. When an SMA sample exhibiting superelasticity is stressed at temperature above A_{f} (so that the austenitic state is stable), but below M_{d} (the maximum temperature at which martensitic formation can occur even under stress) it first deforms elastically and then, at a critical stress, begins to transform by the formation of stress-induced martensite. When the stress is released, the martensite becomes unstable and transforms back to austenite, with the sample returning to its original shape. Similarly to the thermally induced transformation, the stress-induced transformation shows a stress hysterisis.

In many shape memory alloys, there is a large hysteresis as the alloy is transformed between austenitic and martensitic states. Moreover, the transformation ranges, {A_{S}-A_{f}} and {M_{S}-M_{f}} can be quite substantial. As a result, reversing of the state of an SMA element may require a temperature excursion of several tens of degrees Celsius, or a stress excursion of several hundreds of MPa. It follows that a temperature excursion of several tens of degrees (or hundreds of MPa) is required for activation and deactivation of a device incorporating shape memory elements. For example, the commercially available near equi-atomic binary nickel-titanium alloys can have a hysteresis width of about 40°C. The total transformation range {A_{f}-M_{f}} can be easily above 60°C.

Many applications of shape memory alloys nowadays are using near equi-atomic binary nickel-titanium alloys. Such nickel-titanium alloys typically have a hysteresis width of about 40°C. Some prior art proposals for use of shape memory material in jewelry may be found in DE-19934312 and in EP-0313070, to which documents the reader is referred for a better understanding of some current applications.

An important point for designers of devices using these materials is that the upper and lower transformation ranges of the hysteresis curve, {Aₛ-A_{f}} and {Mₛ-M_{f}}, can be quite substantial. Figure 1 shows that in order to switch from the 'on' state at the activation temperature Tₐ to the 'off' state at the deactivation temperature T_{d} and vice versa, the hysteresis and the two transformation ranges have to be overcome. Large transformation temperature ranges may result in a slow/sluggish action of such devices or in the need for unreasonable amounts of force. This may lead to an approach as proposed in DE-19934312 and in EP-0313070, in which the transformation ranges of the hysteresis curve, {Aₛ-A_{f}} and {Mₛ-M_{f}}, are set such that the jewelry described is manipulated using only super elastic properties.

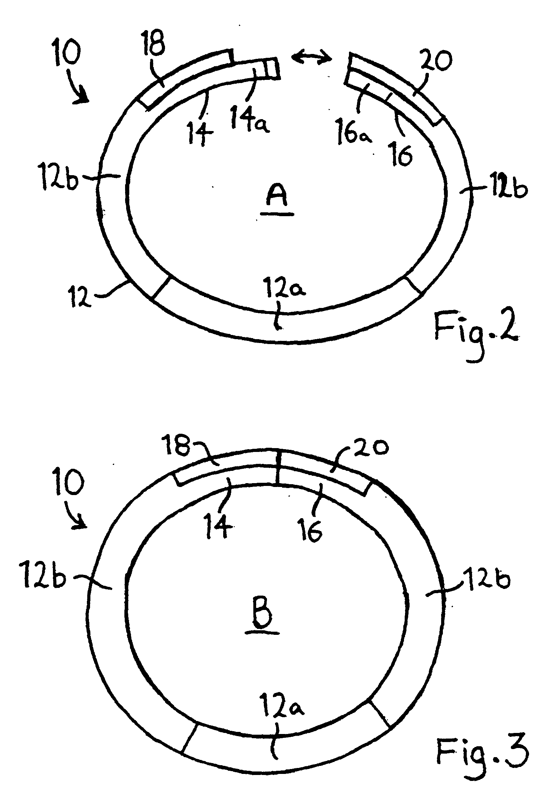

The shape memory effect of the material is used as the enabling technology for putting the jewelry on, i.e. moving it into its in-use or activated state. This contrasts with the prior art approach of using super elasticity. Embodiments of jewelry include ornamental bands that are adapted to be placed and at least temporarily kept on a body part of a wearer. One embodiment of such an ornamental band is in the form of a ring is disclosed with particular reference now also to Figures 2 to 4.

A ring 10 is made in the form of a band 12 including a shape memory material, the ring 10 having a 'cold' shape or configuration which comprises an open state A in which the ring 10 is adapted to fit over a finger of a wearer. In the open state A, the ring adopts a substantially elliptical or enlarged circular state.

If the ring 10 is formed in such a manner that its active shape memory material exhibits a two-way shape memory effect, the ring 10 may be able to adopt the "cold" shape or configuration purely by shape memory. This will be the case only if the material is appropriate and if ring 10 is reduced in temperature to a level at or below the deactivation temperature T_{d} of that two-way shape memory material.

The ring 10 exhibits a super-elastic/pseudo-elastic behavior at temperatures above A_{f}. When the ring 10 is opened at such temperatures, the ring 10 will automatically recover its closed shape when the force is removed. At temperatures below A_{f} and particularly close to or below Aₛ, however, the ring 10 can be moved into its open state by applying an appropriate force, e.g. an outward bias from within the ring 10 or a pulling force from without. After removal of that force, there will be no or only partial recovery and the ring 10 remains substantially open. When fitted, the body temperature of the wearer's finger raises the temperature of the ring 10 to a temperature above A_{f}, at which the ring 10 automatically closes to adopt a "hot" shape or configuration B in the form of a closed state B having a reduced diameter compared to the open state A and in which state B the ring 10 encloses the wearer's finger.

The starting shape memory material used to form the band 12 can have an elongate shape, such as a wire shape, a strip shape and the like. Opposing ends of the band 12 comprise end portions in the form of jaws 14, 16 which are mutually opposed in a face-to-face relationship and are adapted to move substantially into engagement as the temperature of the ring 10 reaches or exceeds a predetermined level. Relative movement between the jaws 14, 16 is adapted to occur in one plane, such that for example the jaws 14, 16 come up against each other in a non-helical fashion and do not overlap before, during or after relative movement has occurred.

On closing, the jaws 14, 16 at least partially abut and exhibit a clamping force therebetween, the force being such that if the jaws 14, 16 were able to pass each other there would be an overlap for a typical ring 10 in the hot state B of at least 0.1, preferably 0.5 and more preferably 1.0 mm, greater levels of theoretical overlap being possible. The ring 10 may be stabilized by training the shape memory material to minimize between multiple cycles residual changes in the hot shape B. The training may preferably be to such an extent that the residual shape change is less than the overlap, which enables the ring 10 to be fitted and removed many times without failing or losing the quality of its fit. The clamping force grips the opposing ends 14, 16 of the band 12 together such that the ring 10 may appear to a wearer or an observer to be of continuous construction. This aspect also helps maintain dimensional stability and is useful in keeping the ring 10 within strict tolerances of finger sizing.

Optionally, the jaws 14, 16 may be adapted to carry an indicator arrangement, which may be in the form of decorative members such as a pair of name plates 18, 20 representative of two people getting married. Such plates may comprise, for example gold name plates and may be fixed to the jaws 14, 16 in a variety of ways, for example by joining with a fixing means such as an adhesive, solder, braze, a fusion weld, spot welds, rivet, captive fixing, clinch or a crimp. Instead of nameplates 18, 20, the indicator arrangement may comprise names or other marking engraved directly into the ring 10, e.g. on or to the sides of the jaws 14, 16. The name plates 18, 20 or engraved names would then move towards each other after an open ring 10 was fitted to the finger of a wearer and such movement could attract significance to the couple and observers as part of the ceremony. The nameplates 18, 20 or engraved names further act as indicia of activation and deactivation of the ring 10, as their abutment is indicative of closure of the jaws 14, 16. The indicator arrangement may take a different form and may indeed be reversed, such that for example a message is visible in the open state A but obscured in the closed state B. A further version, which may also be combined with another version, may be to include an item such as a precious stone which is visible in the open state A and partially or full hidden in the closed state B. In this manner, perhaps only the wearers would know such closure indicia were present and the secret could be used to add significance to the giving ceremony.

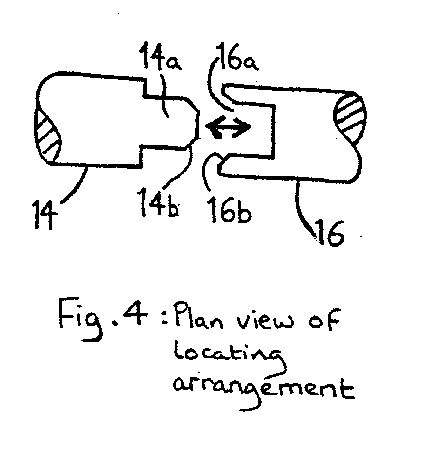

The jaws 14, 16 may in a simple form be no more than opposing faces at the ends of the band 12 but are preferably at least formed or worked so as to make a close fit, i.e. a join which will be substantially imperceptible to a wearer or observer and have no visible or feelable gaps. The jaws 14, 16 may optionally include a locating arrangement adapted to bring the opposing jaws 14, 16 into substantial alignment by self-centering them as they come into engagement and abutment. One exemplary version of such a locating arrangement is illustrated in Figure 4 and comprises a male dowel 14a on one jaw 14 which is adapted to enter a substantially corresponding cavity 16a defined in its opposing jaw 16, self-centering being achieved by chamfers 14b, 16b of the dowel 14a and the cavity 16a respectively. The locating arrangement may in addition comprise a latching means, which can add further mechanical strength to the clamping force of the jaws 14, 16 and may help in cases where the ring 10 makes excursions into cold regions and may get caught and pulled open. Such a latching arrangement may also take on a symbolic significance to a couple getting wed, although it should preferably be reversible in case the ring 10 needs to be removed, e.g. in the case of injury.

Once fitted, the ring 10 can be removed from the digit of a wearer reasonably easily but hardly accidentally, any optional latching means permitting. This will, however, usually call for a deliberate decision to do so and the appropriate course of action being followed. For example, removal may be effected by cooling the ring 10 in a saline solution chilled with blocks of ice and by pulling it open using manual force or a mechanical aid such as a gripping or expanding device. Such a mechanical aid may comprise a pincer device adapted to partially flatten at least a portion of the circumference of band 12, or may be in the form of an adapter that can be used with conventional pliers. This device or adapter may be the same device used to move the ring 10 into its open state A for initial supply.

Clearly, the A_{f} point should be selected so that the temperature of such a saline solution is not unreasonable for a wearer. The A_{f} point should not, however, be too high for two reasons. Firstly, if the A_{f} point becomes too close to body temperature, the closing action may be too slow which could be undesirable or even impractical, e.g. during a wedding ceremony. Secondly, the A_{f} point should not be too high as that might make the ring 10 moveable towards its open state A at too high a temperature. For these reasons, an A_{f} point of above 30 degrees centigrade may prove too high. For comfort, an A_{f} point above zero degrees centigrade is however preferred, more preferably above 10 degrees centigrade and most preferably between 10 and 30 degrees centigrade. In this manner, a ring 10 can be delivered in an open state A, from which it will move into a closed state B when fitted.

Optionally, the ring 10 may not comprise a complete band of shape memory material and may only comprise a section thereof in the form of a predetermined activation portion 12a of the material. Such an arrangement may position the activation portion 12a at the bottom of the band 12, so that it is best positioned to cause equal relative movement between the jaws 14, e.g. by pivoting the jaws 14 towards each other and into engagement. This option also allows for one or more inactive sections 12b substantially devoid of shape memory material, by which the ring 10 can be held with an increased time to activation, such as might prove useful for a giver of the ring during a ceremony.

In any case, end portion closure simultaneously achieves jewelry fitting and reaches an in-use aesthetic appearance by changing an externally visible shape or configuration of the jewelry in response to a temperature change.

Delivery of a ring 10 should be carefully controlled, in order to prevent it from closing and potentially causing embarrassment at for example a wedding service. The ring 10 may be placed in its open state A by cooling sufficiently below Mₛ (if it exhibits two-way shape memory effects), or more preferably by mechanically forcing it open at a temperature at or below A_{f}. In cases of mechanical forcing, temperatures sufficiently below A_{f} are preferred, since this reduces the chances of damaging the ring 10.

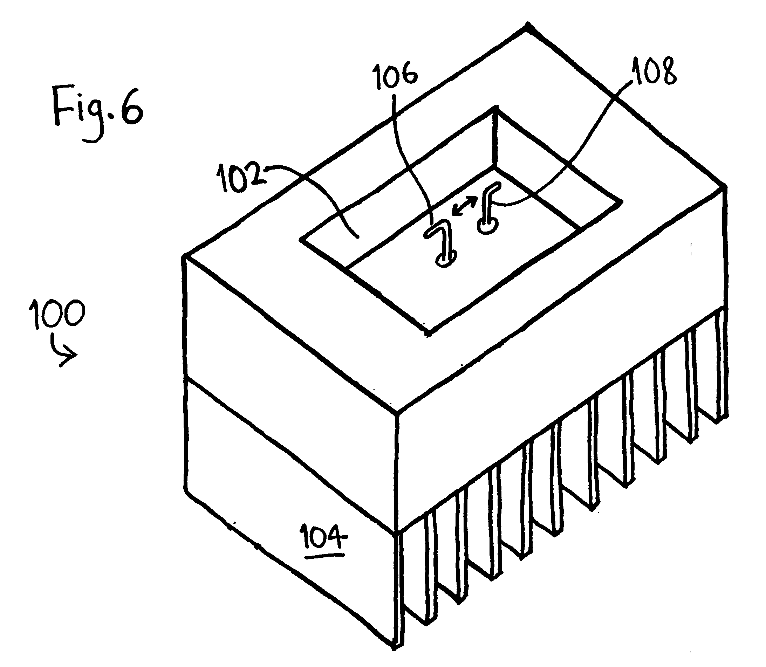

As discussed above, the force may be applied using a mechanical aid to partially deform a portion of the band 12, which may be the active section 12a. Once opened, it is important to keep the ring 10 in this state A and to this end a temperature varying device 100 may be provided with particular reference for the moment to Figure 6.

The temperature varying device 100 comprises a chamber 102 which is adapted to receive the ring 10 and may be associated with an electrically operated cooling circuit 104 powered by batteries for portability (not shown separately). Forms of cooling other than electrically based arrangements may be used, e.g. self-chilling CO₂ modules. The cooling chamber 102 keeps the ring 10 at or below a temperature between about 0 and 20 degrees centigrade, such that it is cool enough once removed to stay open for long enough to fit it during a ceremony.

For practical purposes, it is preferable that the temperature varying device 100 is non-intrusive and this may lead to a requirement for a small internal battery pack. In order to keep power consumption down, in a variation to this fitting arrangement, the ring 10 may be placed in the chamber in a closed state B and the temperature varying device 100 transported switched off and the ring 10 therefore substantially at ambient temperature.

For aesthetic purposes, it may be desirable to disguise the temperature varying device 100 in a presentation box (not shown). The temperature varying device 100 and presentation box may be loaned or hired in returnable fashion, e.g. when the ring 10 is supplied or for its transport and/or storage in relation to a ring-giving ceremony.

Once near the ceremony, the temperature varying device 100 is switched on and cools the ring 10 to a temperature at or below A_{f}, e.g. between about 0 and 20 degrees centigrade. It will be apparent, however, that in order to supply the ring 10 in an open state A at the ceremony, means must be provided to move it into the open state A once below A_{f}. This could be achieved by opening the box and applying manual or aided force, as discussed above, and then replacing the ring 10 in the box. This could cause embarrassment if forgotten and it is preferable to deliver the ring 10 open or to provide opening means adapted to open the ring 10 automatically and without user intervention, yet still keeping down battery power consumption. This may be achieved, for example, by using a biasing means adapted to apply a pulling or pushing force from respectively outside or inside the ring 10. The bias applied should be sufficient to open the ring 10 automatically once the temperature varying device 100 has been switched on and cooled the ring 10 to or below a predetermined temperature, dictated by the properties of the ring 10 and the biasing device employed.

A simple version of biasing means might be an elastomeric insert that is squeezed into a closed ring 10. Another approach would be to provide pulling or pushing arms 106, 108 which are integrated into the temperature varying device 100 and may usefully be biased to apply an opening force on the ring 10 through means of a biasing element such as a spring (not illustrated separately). Such a biasing element would preferably be hidden from view and the arms 106, 108 may be retractable, e.g. on accessing the ring 10, so as to enhance the aesthetic appeal of the presentation.

A simple and alternative method would be to pre-open the ring 10 at or below A_{f} and to jig it in the open position, e.g. by inserting a dowel or by placing it over a solid former in the cooling chamber. Such an approach is, however, less desirable than the biasing means discussed above.

Other embodiments of ornamental bands according to the jewelry of the present invention may include bracelets, earrings, body piercings and necklaces. These bands can be opened when subjected to a low temperature to ease fitting around, to or through the respective body part and then close automatically when they are heated by body warmth of the wearer.

Like all embodiments of the present invention, there is a change in externally visible shape or configuration of the jewelry that occurs simultaneously with fitting, i.e. from a first state adapted for fitting to an in-use state. This change in external shape or configuration can be used to achieve one or both of functional or aesthetic goals.

Such bands may have one or more of the features now discussed, many of which may be common with features relating also to finger rings 10 according to the first embodiment of ornamental band discussed above. The band (which might be integrated in another element) may be fitted nicely around, over, through or gripping against a body part, without any additional swinging hinges, manually actuated locks, screws and the like. The band will close or expand at high temperatures and can be opened or shrunk at lower temperatures. The band's shape or configuration may be changed or varied with temperature differences.

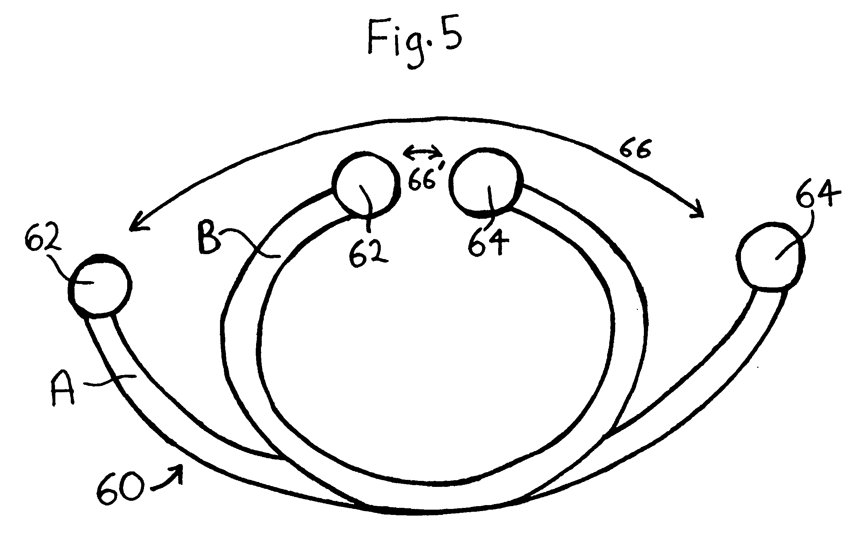

Referring now for the moment in particular to Figure 5, in accordance with the present invention a bracelet is made in the form of a band 60 and includes a portion of shape memory material. The band 60 comprises a substantially rigid structure in the form of an open bangle formed from a starting material comprising a strip, bar or wire bent around into a substantially circular or elliptical non-overlapping band shape. It will be appreciated that other shapes such as polygons may be formed. A pair of end portions in the form of substantially complementary spherical pieces 62, 64 are formed at the opposing ends of the band 60 and face each other across a gap once the material has been bent, e.g. around a former.

The shape memory material is adapted to give the band 60 a closed state, which comprises a 'hot' shape or configuration B, and an open state which comprises a 'cold' shape or configuration A. In the cold shape A, the band is in a substantially elliptical or enlarged circular open-ended shape A in which the spherical pieces 62, 64 are spaced apart by a gap 66 large enough to allow the band 60 to be fitted to a body part of a wearer, e.g. a wrist. In the hot shape B, the band 60 adopts a closed shape B which comprises a substantially elliptical or circular shape B having an inter-piece gap 66' reduced from the gap 66 of the cold shape A, and thus possibly restricting removal of the band 60 from the body part. The gap 66, 66' between the spherical pieces 62, 64 therefore reduces during transitions from the cold shape A to the hot shape B and increases during transitions from the hot shape B to the cold shape A, thus simultaneously achieving jewelry fitting/removal and reaching/leaving in use aesthetic appearance by changing an externally visible shape or configuration. In common with each embodiment of the present invention, the piece of jewelry is non-helical and its end portions move relative to each other in a substantially face-to-face relationship and preferably in substantially the same plane.

When it comes to fitting (or removing) the band 60, if not already open A, the band 60 can be deformed below a predetermined temperature, e.g. by hand and into the 'cold' shape A. Cooling may be performed using for example a saline solution, iced (or possibly just cold) water, a freezing spray or equivalents.

Thus, fitting to a wearer is performed by putting the band into its open state A and then heating the band 20 so that it adopts the closed state B. Heating is performed by for example body temperature, whereupon the band 20 will move from the cold shape A to the hot shape B automatically. It can thus be seen that, in similar fashion to the finger rings 10 discussed above, shape memory effect is used as the mechanism to fit/remove the jewelry, i.e. to move the end portions into/out of an in-use or as-worn condition B, while simultaneously changing an externally visible shape or configuration. The shape memory material is preferably stabilized by training, such that fitting and removal can be repeated as often as desired.

The shape memory material may comprise a metal alloy and the processing of the shape memory base material is performed in order to have transformation temperatures A_{S}, A_{F}, M_{S} and M_{F} in the necessary range. In a preferred embodiment, the bracelet 60 can be opened at lower temperatures and keeps the open shape at temperatures at or slightly above room temperature. In this way the bracelet 60 with the open shape A can be stored and transported easily. The corresponding technical request is that A_{S} and A_{F} should be sufficiently high. It will be appreciated that a cooling apparatus and/or a jigging arrangement similar to that described above may be adapted for such bracelets 60 and other bands.

The larger the temperature difference between body temperature and A_{F}, the faster will be the shape change from the cold shape A to the hot shape B. A sufficiently fast action is required for practical and aesthetic reasons and it follows that A_{F} has to be sufficiently below body temperature. For practical reasons, it should be possible to open the bracelet at sufficiently high temperatures, for which it follows that A_{S} should be sufficiently high.

Combining the requests above, it also follows that a small temperature range for the reverse transformation is preferred, for aesthetic reasons as well as for practical reasons. As an example, an A_{S} close to 22°C (between 18°C and 25°C) and an A_{F} close to 28°C (between 23°C and 30°C) is preferred. The difference between A_{F} and A_{S} is preferably 10°C or less, more preferably 7°C or less and most preferably 5°C or less. The reason for this is that such a bracelet can be opened at some degrees centigrade below A_{S}. Hence, A_{S} should not be too low otherwise a low temperature will have to be applied which may be inconvenient for the wearer. The same or similar considerations apply to material suitable for the production of jewelry according other embodiments of the present invention, such as the closing ring 10 discussed above.

The shape memory material for many embodiments of jewelry according to the present invention can be made of many shape memory materials.
Some examples:
binary Nickel Titanium (abbreviated to Ni-Ti);
Nickel Titanium with other alloying elements;
Nickel Titanium Copper with other alloying elements;
Nickel Titanium Copper Chromium;
Cu based shape memory alloys, such as CuZnAl and CuAlNi with further alloying elements; and
Au based shape memory alloys.

The transformation temperatures of most shape memory alloys are composition and processing dependent. In order to obtain the appropriate transformation temperatures, alloys of appropriate composition and which underwent appropriate processing have to be selected.

With regard to production of the jewelry, the starting material may be wire, strip and the like with correct dimensions and made of appropriate alloys which have undergone appropriate processing (see above). The further production of the bands can involve several steps, such as (i) shape setting treatments, (ii) extra heat treatments, (iii) polishing and coloring processes, and (iv) adding other objects. The sequence given here is only indicative; other sequences can be followed.

Considering shape or configuration setting treatment, in this step the hot shape B is given to the shape memory element. It typically involves (i) the production of a mandrel with the appropriate shape, (ii) fixing the shape memory element on or around the mandrel, (iii) putting the mandrel with the fixed shape memory element in a furnace or the like (molten salt bath or similar) for appropriate times and at appropriate temperatures, and (iv) cooling and removing the shape memory element from the mandrel. Afterwards, the shape memory element will have the required hot shape. Taking the example of Ni-Ti based elements, the heat treatment temperature and time will be typically 400-550°C for 2 to 30 minutes, although other procedures can be followed. Additional heat treatments might be required to shift the transformation temperatures or to change the ductility of the shape memory elements.

For aesthetic reasons, polishing and coloring treatments might be required. Grinding and polishing (electropolishing or mechanical polishing) will give a metal color. For the case of Ni-Ti based elements, yellow, blue, black and intermediate surface colors can be obtained by appropriate heat treatment. Different colors can also be obtained via coatings and paints.

Other objects can be connected to the shape memory elements. For example for the case of the bracelet, diamonds, golden balls and the like can be put on the shape memory element for aesthetic reasons.

## Claims

1. A piece of jewelry comprising first and second substantially opposing end portions, said piece of jewelry comprising at least a section made from a shape memory material which exhibits thermal hysteresis having upper and lower temperature transformation ranges with a start and finish temperature, wherein said shape memory material is adapted to use shape memory effect so as to cause, above an upper transformation start temperature, automatically relative movement between said end portions from an open state, in which said end portions are spaced apart by a gap adapted for fittment of said jewelry, towards a closed state in which said gap is reduced such that said jewelry is fitted.

2. A piece of jewelry according to claim 1, wherein said relative movement is adapted to result in a change to an externally visible shape or configuration of said piece of jewelry.

3. A piece of jewelry according to any preceding claim, wherein said upper temperature transformation range is 10°C or less, preferably 7°C or less and more preferably 5°C or less.

4. A piece of jewelry according to any preceding claim, wherein said upper transformation finish temperature A_{f} is below body temperature and preferably in the range of 10°C to 30°C.

5. A piece of jewelry according to any preceding claim, wherein said shape memory material comprises a stabilized shape memory material, trained and adapted for repeated movement between said open and closed states.

6. A piece of jewelry according to any preceding claim, wherein removal of said piece of jewelry from a wearer is restricted once said jewelry has substantially moved into said closed state.

7. A piece of jewelry according to any preceding claim, wherein said piece of jewelry is adapted in said closed state to at least one of partially capture, grip, pass through or enclose a body part of a said wearer.

8. A piece of jewelry according to any preceding claim, wherein said relative movement is adapted to occur substantially in one plane.

9. A piece of jewelry according to any preceding claim, wherein said relative movement is adapted to bring said end portions into engagement, in which state said end portions are in at least partial abutment with a clamping force there between.

10. A piece of jewelry according to claim 9, wherein one or both of said end portions comprise a locating arrangement adapted to align said end portions in a substantially predetermined relationship when said end portions are engaged.

11. A piece of jewelry according to claim 9 or claim 10, further comprising a latching means adapted to latch said end portions into said closed state at least temporarily and preferably removably.

12. A piece of jewelry according to any one of claims 9 to 11, further comprising an indicator arrangement adapted to indicate when said end portions are at least one of open or closed.

13. A piece of jewelry according to claim 12, wherein said indicator arrangement comprises indicia which is at least one of displayed or hidden when said jewelry is in said closed state.

14. A piece of jewelry according to any preceding claim, wherein said shape memory section is adapted to move said end portions in a substantially pivotal manner.

15. A piece of jewelry according to any preceding claim, wherein said piece of jewelry is adapted to be gripped or pulled on at least a predetermined section and in such a manner that a gripping or pulling force above a predetermined level moves said piece of jewelry towards said open state.

16. A piece of jewelry according to claim 15, wherein said end portions are adapted to be opened from a closed state under the influence of a said predetermined level of force applied below a predetermined temperature at which said shape memory material adopts a pseudo-elastic state.

17. A piece of jewelry according to any preceding claim, wherein said piece of jewelry comprises an inactive section, which may be substantially devoid of shape memory material, such that said piece of jewelry is adapted to be handled by said inactive section substantially without changing shape for at least a predetermined time period, so as for example to enable manual fittment.

18. A piece of jewelry according to any preceding claim, wherein said piece of jewelry comprises an ornamental band whose said open state comprises a substantially elliptical or enlarged circular open-ended shape and whose closed state comprises a reduced gap open-ended shape or a substantially closed shape.

19. A piece of jewelry according to any preceding claim, wherein said piece of jewelry comprises a ring whose said open state comprises a substantially elliptical or enlarged circular open-ended shape and whose closed state comprises a substantially closed circle.

20. A piece of jewelry according to any preceding claim, said piece of jewelry being arranged in a storage and/or fitting arrangement, wherein said arrangement comprises a temperature varying device adapted to bring a said piece of jewelry to or beyond a temperature at which said piece of jewelry is moveable into said open state.

21. A piece of jewelry according to claim 20, wherein said temperature varying device comprises a cooling chamber adapted to receive a said piece of jewelry and a heat exchange means adapted to reduce the temperature of said piece in said chamber.

22. A piece of jewelry according to claim 21, wherein said heat exchange means comprises an electrically operated heat sink apparatus, preferably portable and adapted for battery operation.

23. A piece of jewelry according to any one of claims 20 to 22, wherein the storage and/or fitting arrangement further comprises a biasing means adapted to bias a piece of jewelry therein towards said open state.

24. A method of producing a piece of jewelry, including:
a) providing an elongate piece of material comprising at least a section which includes a shape memory material, said shape memory material exhibiting thermal hysteresis having upper and lower temperature transformation ranges with a start and finish temperature;
b) forming on opposing ends of said piece of material first and second end portions;
c) forming said piece of material into an open state adapted for fittment to a body part of a wearer and in which open state said end portions substantially face each other spaced apart by a gap; and
d) adapting said shape memory material to move, above an upper transformation start temperature, automatically at least one said end portion towards a closed state in which said gap is reduced or said end portions are substantially engaged, whereby shape memory effect is used for fitting said piece of jewelry to a wearer whilst simultaneously changing an externally visible shape or configuration of said piece of jewelry.

25. A method according to claim 24, including stabilizing said shape memory portion for repeated movement of said end portions between said open and closed states, preferably stabilizing said shape memory material by training.

## Patentansprüche

1. Schmuckstück, mit einem ersten und einem zweiten im Wesentlichen offenen Endstück, wobei das Schmuckstück mindestens einen Abschnitt aufweist, welcher aus einem Formgedächtnismaterial gebildet ist, welches eine thermische Hysterese aufweist, welche einen oberen und einen unteren Temperaturwandlungsbereich mit einer Start- und einer Endtemperatur aufweist, wobei das Formgedächtnismaterial zum Verwenden eines Formgedächtniseffekts eingerichtet ist, um oberhalb einer oberen Wandlungsstarttemperatur eine automatische relative Bewegung zwischen den Endstücken von einem offenen Zustand, in welchen die Endstücke durch einen Spalt voneinander getrennt sind, welcher zum Anpassen um das Schmuckstück eingerichtet ist, in einen geschlossenen Zustand zu bewirken, in welchem der Spalt verringert wird, so dass das Schmuckstück angepasst wird.

2. Schmuckstück nach Anspruch 1, wobei die relative Bewegung zum Resultieren in einer Änderung der extern sichtbaren Form oder Konfiguration des Schmuckstücks eingerichtet ist.

3. Schmuckstück nach einem der vorhergehenden Ansprüche, wobei der obere Temperaturwandlungsbereich 10°C oder weniger, vorzugsweise 7°C oder weniger, und besonders bevorzugt 5°C oder weniger groß ist.

4. Schmuckstück gemäß nach einem der vorhergehenden Ansprüche, wobei die obere Wandlungsendtemperatur Aᵣ unterhalb der Körpertemperatur, und vorzugsweise in dem Bereich von 10°C bis 30°C liegt.

5. Schmuckstück gemäß einem der vorhergehenden Ansprüche, wobei das Formgedächtnismaterial ein stabilisiertes Formgedächtnismaterial aufweist, welches für wiederholte Bewegung zwischen den offenen und geschlossenen Zuständen trainiert und eingerichtet ist.

6. Schmuckstück nach einem der vorhergehenden Ansprüche, wobei ein Entfernen des Schmuckstücks von einem Träger verhindert wird, nachdem das Schmuckstück sich im Wesentlichen in einen geschlossenen Zustand bewegt hat.

7. Schmuckstück nach einem der vorhergehenden Ansprüche, wobei das Schmuckstück eingerichtet ist, in dem geschlossenen Zustand ein Körperteil des Trägers mindestens teilweise zu fassen, zu greifen, zu durchlaufen und/oder zu umgeben.

8. Schmuckstück nach einem der vorhergehenden Ansprüche, wobei die relative Bewegung eingerichtet ist, im Wesentlichen in einer Ebene zu erfolgen.

9. Schmuckstück nach einem der vorhergehenden Ansprüche, wobei die relative Bewegung eingerichtet ist, die Endstücke in ein Ineinandergreifen zu bringen, wobei in dem Zustand die Endstücke mindestens teilweise in einem Widerlager mit einer Klemmkraft dazwischen sind.

10. Schmuckstück nach Anspruch 9, wobei eine oder beide Endabschnitte eine Führungsanordnung aufweisen, welche zum Ausrichten der Endstücke in einer im Wesentlichen vorbestimmten Beziehung eingerichtet ist, wenn die Endstücke eingerastet sind.

11. Schmuckstück nach einem der Ansprüche 9 bis 11, mit weiter einer Verschlusseinrichtung, welche eingerichtet ist, die Endstücke in dem geschlossenen Zustand zumindest zeitweise und vorzugsweise lösbar zu verschließen.

12. Schmuckstück nach einem der Ansprüche 9 bis 11, mit weiter einer Indikatoreinrichtung, welche zum Anzeigen, wann die Endstücke offen und/oder geschlossen sind, eingerichtet ist.

13. Schmuckstück nach Anspruch 12, wobei die Indikatoreinrichtung einen Indikator aufweist, welche angezeigt und/oder versteckt ist, wenn das Juwelierstück in dem geschlossenen Zustand ist.

14. Schmuckstück nach einem der vorhergehenden Ansprüche, wobei der Formgedächtnisabschnitt zum Bewegen der Endstücke in einer im Wesentlichen drehenden Weise eingerichtet ist.

15. Schmuckstück nach einem der vorhergehenden Ansprüche, wobei das Schmuckstück zum Klemmen oder Ziehen an mindestens einem vorbestimmten Abschnitt eingerichtet ist und in solch einer Weise, dass eine Klemm- oder Zugkraft oberhalb eines vorbestimmten Pegels das Schmuckstück in den offenen Zustand bewegt.

16. Schmuckstück nach Anspruch 15, wobei die Endabschnitte zum Öffnen aus einem geschlossenen Zustand unter dem Einfluss des vorbestimmten Pegels der Kraft eingerichtet sind, welche unterhalb einer vorbestimmten Temperatur angewandt wird, in welchem das Formgedächtnismaterial einen pseudoelastischen Zustand einnimmt.

17. Schmuckstück nach einem der vorhergehenden Ansprüche, wobei das Schmuckstück einen inaktiven Bereich aufweist, welcher im Wesentlichen ohne Formgedächtnismaterial ist, so dass das Schmuckstück zum Behandeln des inaktiven Abschnittes ohne wesentliche Formänderung für eine zumindest vorbestimmte Zeitspanne eingerichtet ist, wie z.B. um eine manuelle Anpassung zu ermöglichen.

18. Schmuckstück nach einem der vorhergehenden Ansprüche, wobei das Schmuckstück ein ornamentiertes Band aufweist, dessen offener Zustand im Wesentlichen eine elliptische oder verlängert kreisförmige, offenendige Form aufweist und dessen geschlossener Zustand eine reduzierte, spaltförmige, offenendige Form oder eine im Wesentlichen geschlossene Form aufweist.

19. Schmuckstück nach einem der vorhergehenden Ansprüche, wobei das Schmuckstück einen Ring aufweist, dessen offener Zustand eine im Wesentlichen elliptische oder verlängerte kreisförmige, offenendige Form und dessen geschlossener Zustand einen im Wesentlichen geschlossenen Kreis aufweist.

20. Schmuckstück nach einem der vorhergehenden Ansprüche, wobei das Schmuckstück in einer Aufbewahrungs- und/oder Anpassungsanordnung angeordnet ist, wobei die Anordnung eine temperaturändernde Vorrichtung aufweist, welche eingerichtet ist, das Schmuckstück auf oder oberhalb einer Temperatur zu bringen, an welcher das Schmuckstück in den offenen Zustand bewegbar ist.

21. Schmuckstück nach Anspruch 20, wobei die temperaturändernde Vorrichtung eine Kühlkammer aufweist, welche geeignet ist, das Schmuckstück aufzunehmen, und eine Wärmetauschereinrichtung, welche zum Reduzieren der Temperatur des Schmuckstücks in der Kammer eingerichtet ist.

22. Schmuckstück nach Anspruch 21, wobei die Wärmetauschereinrichtung eine elektrisch betriebene Wärmesenkevorrichtung aufweist, welche vorzugsweise tragbar und für einen Batteriebetrieb eingerichtet ist.

23. Schmuckstück nach einem der Ansprüche 20 bis 22, wobei die Aufbewahrungs- und/oder Anpassungseinrichtung weiter eine Vorspannungseinrichtung aufweist, welche zum Vorspannen eines Schmuckstücks zu dem offenen Zustand darin eingerichtet ist.

24. Verfahren zum Herstellen eines Schmuckstücks, mit den Schritten:
a) Bereitstellen eines länglichen Materialstücks, welches mindestens einen Abschnitt aufweist, welcher ein Formgedächtnismaterial beinhaltet, wobei das Formgedächtnismaterial eine thermische Hysterese aufweist, welche einen oberen und einen unteren Temperaturwandlungsbereich mit einer Start- und einer Endtemperatur aufweist;
b) Formen eines ersten und eines zweiten Endstückes an gegenüberliegenden Enden des Materialstücks;
c) Formen des Materialstücks in einen offenen Zustand, welcher zum Anpassen an ein Körperteil eines Trägers geeignet ist und in dessen offenem Zustand die Endstücke im Wesentlichen einander beabstandet durch einen Spalt gegenüberstehen; und
d) Anpassen des Formgedächtnismaterials sich automatisch oberhalb einer oberen Transformationsstarttemperatur mit mindestens einem Endstück in einen geschlossenen Zustand zu bewegen, in welchem der Spalt reduziert ist oder die Endstücke im Wesentlichen ineinander eingerastet sind, wobei der Formgedächtniseffekt zum Anpassen des Schmuckstücks an den Träger verwendet wird, während gleichzeitig eine extern sichtbare Form oder Konfiguration des Schmuckstücks geändert wird.

25. Verfahren nach Anspruch 24 beinhaltend ein Stabilisieren des Formgedächtnisanteils für wiederholte Bewegung der Endstücke zwischen dem offenen und geschlossenen Zustand, wobei das Formgedächtnismaterial vorzugsweise durch Training stabilisiert wird.

## Revendications

1. Bijou comprenant des première et seconde parties d'extrémité sensiblement opposées, ledit bijou comprenant au moins une section réalisée à partir d'un matériau à mémoire de forme qui présente une hystérésis thermique ayant des plages de transformation en température supérieure et inférieure avec une température de début et une température de fin, dans lequel ledit matériau à mémoire de forme est conçu pour utiliser l'effet à mémoire de forme pour provoquer automatiquement, au-dessus d'une température de début de transformation supérieure, un déplacement relatif entre lesdites parties d'extrémité à partir d'un état ouvert, dans lequel lesdites parties d'extrémité sont écartées avec un écartement conçu pour la mise en place dudit bijou, vers un état fermé dans lequel ledit écartement est réduit pour que ledit bijou soit mis en place.

2. Bijou selon la revendication 1, dans lequel ledit déplacement relatif est conçu pour aboutir à un changement en une forme ou en une configuration visible de manière externe dudit bijou.

3. Bijou selon l'une quelconque des revendications précédentes, dans lequel ladite plage de transformation en température supérieure est inférieure ou égale à 10 °C, de préférence inférieure ou égale à 7 °C et plus préférablement inférieure ou égale à 5 °C.

4. Bijou selon l'une quelconque des revendications précédentes, dans lequel ladite température de fin de transformation supérieure A_{f} est au-dessous de la température corporelle et est de préférence dans la plage comprise entre 10 °C et 30 °C.

5. Bijou selon l'une quelconque des revendications précédentes, dans lequel ledit matériau
à mémoire de forme comprend un matériau à mémoire de forme stabilisé, entraîné et conçu pour un déplacement répété entre lesdits états ouvert et fermé.

6. Bijou selon l'une quelconque des revendications précédentes, dans lequel l'enlèvement dudit bijou d'un porteur est restreint une fois que ledit bijou s'est sensiblement déplacé dans ledit état fermé.

7. Bijou selon l'une quelconque des revendications précédentes, dans lequel ledit bijou est conçu dans ledit état fermé pour effectuer au moins partiellement l'une des actions suivantes : capturer, saisir, traverser ou enfermer une partie corporelle dudit porteur.

8. Bijou selon l'une quelconque des revendications précédentes, dans lequel ledit déplacement relatif est conçu pour avoir lieu sensiblement dans un plan.

9. Bijou selon l'une quelconque des revendications précédentes, dans lequel ledit déplacement relatif est conçu pour amener lesdites parties d'extrémité en engagement, état dans lequel lesdites parties d'extrémité sont au moins en butée partielle avec une force de serrage entre elles.

10. Bijou selon la revendication 9, dans lequel une ou les deux desdites parties d'extrémité comprend ou comprennent un dispositif de positionnement conçu pour aligner lesdites parties d'extrémité en une relation sensiblement prédéterminée lorsque lesdites parties d'extrémité sont engagées.

11. Bijou selon la revendication 9 ou la revendication 10, comprenant en outre un moyen de verrouillage conçu pour verrouiller au moins temporairement et de préférence de manière amovible lesdites parties d'extrémité dans ledit état fermé.

12. Bijou selon l'une quelconque des revendications 9 à 11, comprenant en outre un dispositif d'indication conçu pour indiquer quand lesdites parties d'extrémité sont au moins dans l'un des états ouvert ou fermé.

13. Bijou selon la revendication 12, dans lequel ledit dispositif d'indication comprend une empreinte qui est au moins affichée ou cachée lorsque ledit bijou est dans ledit état fermé.

14. Bijou selon l'une quelconque des revendications précédentes, dans lequel ladite section à mémoire de forme est conçue pour déplacer lesdites parties d'extrémité d'une manière sensiblement pivotante.

15. Bijou selon l'une quelconque des revendications précédentes, dans lequel ledit bijou est conçu pour être saisi ou tiré sur au moins une section prédéterminée et de sorte qu'une force de saisie ou de traction au-dessus d'un niveau prédéterminé déplace ledit bijou vers ledit état ouvert.

16. Bijou selon la revendication 15, dans lequel lesdites parties d'extrémité sont conçues pour être ouvertes depuis un état fermé sous l'influence dudit niveau prédéterminé de force appliqué au-dessous d'une température prédéterminée à laquelle ledit matériau à mémoire de forme adopte un état pseudo-élastique.

17. Bijou selon l'une quelconque des revendications précédentes, dans lequel ledit bijou comprend une section inactive, qui peut être sensiblement dépourvue d'un matériau à mémoire de forme, de sorte que ledit bijou est conçu pour être manipulé par ladite section inactive sans pratiquement aucune variation de forme sur au moins une durée prédéterminée, de façon à permettre par exemple une mise en place manuelle.

18. Bijou selon l'une quelconque des revendications précédentes, dans lequel ledit bijou comprend une bande ornementale dont ledit état ouvert comprend une forme aux extrémités ouvertes sensiblement elliptique ou en cercle agrandi et dont l'état fermé comprend une forme aux extrémités ouvertes à écartement réduit ou une forme sensiblement fermée.

19. Bijou selon l'une quelconque des revendications précédentes, dans lequel ledit bijou comprend un anneau dont ledit état ouvert comprend une forme aux extrémités ouvertes sensiblement elliptique ou en cercle agrandi et dont l'état fermé comprend un cercle sensiblement fermé.

20. Bijou selon l'une quelconque des revendications précédentes, ledit bijou étant disposé dans un accessoire de stockage et/ou de montage, dans lequel ledit accessoire comprend un dispositif à variation de température conçu pour amener ledit bijou à une température à laquelle ledit bijou est mobile dans ledit état ouvert ou au-delà de celle-ci.

21. Bijou selon la revendication 20, dans lequel ledit dispositif à variation de température comprend une chambre de refroidissement conçue pour recevoir ledit bijou et un moyen d'échange de chaleur conçu pour réduire la température dudit bijou dans ladite chambre.

22. Bijou selon la revendication 21, dans lequel ledit moyen d'échange de chaleur comprend un dispositif dissipateur thermique à commande électrique, de préférence portable et conçu pour un fonctionnement sur batterie.

23. Bijou selon l'une quelconque des revendications 20 à 22, dans lequel l'accessoire de stockage et/ou de montage comprend en outre un moyen de sollicitation conçu pour solliciter un bijou qui s'y trouve vers ledit état ouvert.

24. Procédé de production d'un bijou, comprenant les étapes consistant à :
a) prévoir une pièce allongée d'un matériau comprenant au moins une section qui comprend un matériau à mémoire de forme, ledit matériau à mémoire de forme présentant une hystérésis thermique ayant des plages de transformation en température supérieure et inférieure avec une température de début et une température de fin ;
b) former sur les extrémités opposées de ladite pièce de matériau des première et seconde parties d'extrémité ;
c) former ladite pièce de matériau en un état ouvert conçu pour la mise en place sur une partie corporelle d'un porteur, état ouvert dans lequel lesdites parties d'extrémité sont sensiblement l'une en face de l'autre en étant écartées par un écartement ; et
d) adapter ledit matériau à mémoire de forme pour déplacer automatiquement, au-dessus d'une température de début de transformation supérieure, au moins une dite partie d'extrémité vers un état fermé dans lequel ledit écartement est réduit ou lesdites parties d'extrémité sont sensiblement en engagement, moyennant quoi l'effet à mémoire de forme est utilisé pour mettre en place ledit bijou sur un porteur tout en changeant simultanément une forme ou une configuration visible de manière externe dudit bijou.

25. Procédé selon la revendication 24, comprenant l'étape consistant à stabiliser ladite partie à mémoire de forme pour un déplacement répété desdites parties d'extrémité entre lesdits états ouvert et fermé, stabiliser de préférence ledit matériau à mémoire de forme par entraînement.
